# EUROPÄISCHE PATENTANMELDUNG

(11) **EP 2 492 164 A2**
(43) Veröffentlichungstag der Anmeldung: **29.08.2012**
(21) Anmeldenummer: 12152439.1
(22) Anmeldetag: 25.01.2012
(51) Int. Cl.: B60W 50/14, B60W 30/04, B60K 35/00, B60W 30/14

(54) **Flurförderzeug, insbesondere Schlepper**

(30) Priorität: 25.02.2011 DE 102011012410
(71) Anmelder: STILL GmbH, 22113 Hamburg (DE)
(72) Erfinder: Claus, Alexander, 22303 Hamburg (DE)
(74) Vertreter: Geirhos, Johann

(57) **Zusammenfassung**

Die Erfindung betrifft ein Flurförderzeug (1), insbesondere Schlepper, Kommissionierer oder Plattformwagen, mit einem Bedienplatz (6) und einem Display (4), das derart angeordnet ist, dass es für eine Bedienperson von dem Bedienplatz (6) aus ablesbar ist. Die Aufgabe, dem Bediener eines Flurförderzeugs (1) die Möglichkeit zu geben, sich auf einfache Weise über einen aktuellen Neigungswinkel des Flurförderzeugs (1) zu informieren, wird erfindungsgemäß dadurch gelöst, dass das Flurförderzeug (1) einen Fahrtrichtungsneigungssensor (10) zur Bestimmung des Fahrtrichtungsneigungswinkels des Flurförderzeugs (1) aufweist und das Display (4) eingerichtet ist, den von dem Fahrtrichtungsneigungssensor (10) ermittelten Fahrtrichtungsneigungswinkel anzuzeigen.

## Beschreibung

Die Erfindung betrifft ein Flurförderzeug, insbesondere Schlepper, Kommissionierer oder Plattformwagen, mit einem Bedienplatz und einem Display, das derart angeordnet ist, dass es für eine Bedienperson von dem Bedienplatz aus ablesbar ist.

Der innerbetriebliche Warentransport und Materialfluss, insbesondere die Materialversorgung von Produktionslinien in Produktionsbetrieben, erfolgt in der Regel mittels Anhängern, auf denen die zu transportierenden Waren, insbesondere mittels Transportbehälter, Paletten oder Gitterboxen, innerhalb des Produktionsbetriebes transportiert werden.

Zum Ziehen eines oder mehrerer dieser Anhänger werden als Schlepper ausgebildete Lagertechnikflurförderzeuge verwendet, die mit einer entsprechenden Anhängevorrichtung vorgesehen sind, an die ein oder mehrere Anhänger angehängt werden können. Derartige Schlepper weisen kompakte Abmessungen auf, durch die Transportanhänger innerhalb eines Produktionsbetriebes auf beengten Transportwegen sicher transportiert werden können.

Derzeit werden Schlepper in der Intralogistik in allen Betriebsbereichen eingesetzt. Dabei werden sowohl Außenbereiche als auch Innenbereiche befahren. Es werden Steigung- und Gefällefahrten absolviert und verschiedene Lasten auf an die Anhängevorrichtung angehängten Anhängern und/oder auf der Ladefläche des Schleppers selbst transportiert.

Kommissionierer, insbesondere Niederhub-Kommissionierer bzw. Horizontal-Kommissionierer, mit einem nicht anhebbaren Bedienplatz, werden in Lagern zum Kommissionieren von Waren in Bodenhöhe und gelegentlichem Kommissionieren aus der ersten Regalebene eingesetzt.

Plattformwagen sind Schlepper mit einer verringerten Zugleistung, die hauptsächlich zum Transport einer Ladung auf einer Ladefläche ausgelegt sind. Plattformwagen weisen eine flache, meist durchgehenden Ladefläche auf und besitzen keine oder höchstens niedrige, nach oben offene Aufbauten. Einige Plattformwagen sind durch Planen oder Hauben vollständig abdeckbar und daher besonders für den Transport witterungsempfindlicher Güter im Freien geeignet. Plattformwagen sind zum Ziehen von Anhängern weiterhin mit einer Anhängevorrichtung versehen.

In der betrieblichen Anwendung von Flurförderzeugen ist Sicherheit und Anwenderfreundlichkeit ein wesentlicher Aspekt. Zur Sicherheit gehört u.a. eine Vermeidung des seitlichen Umkippens von Flurförderzeugen bzw. deren Lastaufnahmemittel, wie zum Beispiel Anhänger, und das sichere, rechtzeige Verzögern, um Kollisionen zu vermeiden. Dabei hat der Neigungswinkel der befahrenen Fläche großen Einfluss auf die ideale, genaue Fahrtrichtung des Flurförderzeugs und den Zeitpunkt, an dem eine Bremsung eingeleitet werden muss, um das Flurförderzeug rechtzeitig zum Stillstand bringen zu können. Dem Bediener ist jedoch der Neigungswinkel der befahrenen Fläche in der Regel nicht bekannt.

Der vorliegenden Erfindung liegt die Aufgabe zugrunde, dem Bediener eines Flurförderzeugs die Möglichkeit zu geben, sich auf einfache Weise über einen aktuellen Neigungswinkel des Flurförderzeugs zu informieren.

Diese Aufgabe wird erfindungsgemäß dadurch gelöst, dass ein Flurförderzeug, insbesondere ein Schlepper, Kommissionierer oder Plattformwagen, mit einem Bedienplatz und einem Display, das derart angeordnet ist, dass es für eine Bedienperson von dem Bedienplatz aus ablesbar ist, vorgesehen wird, das einen Fahrtrichtungsneigungssensor zur Bestimmung des Fahrtrichtungsneigungswinkels des Flurförderzeugs aufweist und das Display eingerichtet ist, den von dem Fahrtrichtungsneigungssensor ermittelten Fahrtrichtungsneigungswinkel anzuzeigen.

Flurförderzeuge sind Transportmittel für den Transport von Gütern, die zumeist innerbetrieblich bei ebener Fahrbahn eingesetzt werden. Ein Schlepper ist ein Fahrzeug zum Ziehen von Anhängern, Geräten oder Spezialfahrzeugen für den Transport von Gütern. Ein Plattformwagen ist ein Schlepper zum Befördern von Gütern auf einer Ladefläche.

Ein Bedienplatz ist ein Platz, den eine Bedienperson oder Bediener beim Bedienen eines Flurförderzeugs einnimmt. Ein Bedienplatz kann beispielsweise ein Fahrersitz oder eine Fahrerstandplattform sein.

Ein Fahrtrichtungsneigungswinkel ist ein Neigungswinkel, den das Flurförderzeug in Fahrtrichtung und somit in Längsrichtung des Flurförderzeugs beim Befahren einer Rampe, beispielsweise einer Steigung oder einem Gefälle, aufweist. Dieser Winkel entspricht dem Winkel zwischen der Horizontalen und einer gedachten Geraden, die sich auf der Fahrfläche befindet und unter den Rädern des Flurförderzeugs in Fahrtrichtung verläuft.

Ein Fahrtrichtungsneigungssensor ist ein Sensor, der geeignet ist, den Fahrtrichtungsneigungswinkel eines Flurförderzeugs zu bestimmen, d.h. den Neigungswinkel des Flurförderzeugs in Fahrtrichtung beim Befahren einer Steigung oder eines Gefälles. Ein Fahrtrichtungsneigungssensor kann ein feinmechanisches oder elektrisches Messgerät sein. Die Messprinzipien können unter anderem sein: Pendelkörper mit elektronischem Abgriff, wobei der Pendelkörper mechanisch oder elektromagnetisch gelagert sein kann, Kreiselplattform, reflektierende bzw. refraktierende Flüssigkeitsspiegel, sowie elektrische Sensoren in speziellen Flüssigkeiten.

Die Anzeige des Fahrtrichtungsneigungswinkels im Display kann beispielsweise durch die Anzeige einer Zahl erfolgen.

Gemäß einer bevorzugten Ausführungsform der Erfindung weist das Flurförderzeug einen Lateralneigungssensor zur Bestimmung des Lateralneigungswinkels auf und das Display ist eingerichtet, den von dem Lateralneigungssensor ermittelten Lateralneigungswinkel des Flurförderzeugs anzuzeigen. Aufgrund der Kenntnis sowohl des Fahrtrichtungsneigungswinkels als auch des Lateralneigungswinkels ist der Fahrer besser in der Lage, die aktuelle Gefahr einzuschätzen und entsprechend darauf zu reagieren. Zum Beispiel könnte er die Ausrichtung eines aus einem Schlepper und Anhängern gebildeten Zuges auf eine rechtwinklige Bergabfahrt korrigieren. Auch die Abschätzung einer angemessenen Geschwindigkeit ist auf diese Weise noch präziser möglich.

Ein Lateralneigungswinkel ist ein Neigungswinkel, den das Flurförderzeug senkrecht zur Fahrtrichtung beim Befahren einer Rampe aufweist. Dieser Winkel entspricht dem Winkel zwischen der Horizontalen und einer gedachten Geraden, die sich auf der Fahrfläche befindet und unter den Rädern des Flurförderzeugs senkrecht zur Fahrtrichtung verläuft.

Ein Lateralneigungssensor ist ein Sensor, der geeignet ist, einen Lateralneigungswinkel des Fahrzeugs zu bestimmen. Ein Lateralneigungssensor kann wie ein Fahrtrichtungsneigungssensor ein feinmechanisches oder elektrisches Messgerät sein. Er kann ebenfalls nach den oben für den Fahrtrichtungsneigungssensor beschriebenen Messprinzipien funktionieren.

Bevorzugt ist das Display eingerichtet, den Fahrtrichtungsneigungswinkel anzuzeigen, wenn ein vorbestimmter Fahrtrichtungsneigungswinkel des Flurförderzeugs überschritten ist. Dadurch wird die Darstellung im Display bedarfsabhängig gesteuert. Solange sich das Fahrzeug in der Ebene befindet, kann auf die Darstellung verzichtet werden, kommt das Fahrzeug in eine Schieflage wird im Display die Anzeige des Fahrtrichtungsneigungswinkels aktiv. Dadurch wird ein Bediener nicht von unnötigen Informationen abgelenkt. Außerdem ist die Aufmerksamkeit des Bedieners im Bedarfsfall höher.

Gemäß einer bevorzugten Ausführungsform ist das Display eingerichtet, den Lateralneigungswinkel anzuzeigen, wenn ein vorbestimmter Lateralneigungswinkel des Flurförderzeugs überschritten ist. Dadurch wird auch diese Anzeige im Display bedarfsabhängig gesteuert. Wie bei der bedarfsabhängigen Anzeige des Fahrtrichtungsneigungswinkels des Flurförderzeugs kann auch dieser Winkel angezeigt werden, wenn sich das Flurförderzeug in einer Schieflage befindet und auf die Anzeige verzichtet werden, wenn sich das Flurförderzeug auf eine Ebene befindet. Auch hier wird die Aufmerksamkeit des Bedieners im Bedarfsfall größer sein und der Bediener wird nicht durch unnötige Anzeigen abgelenkt.

Besondere Vorteile ergeben sich, wenn das Flurförderzeug eine Höchstgeschwindigkeitseinrichtung aufweist, die eingerichtet ist auf Basis des von dem Fahrtrichtungsneigungssensor ermittelten Fahrtrichtungsneigungswinkels eine zulässige Höchstgeschwindigkeit zu bestimmen und mit einer von einer Fahrsteuerung des Flurförderzeugs bereitgestellten aktuellen Fahrgeschwindigkeit zu vergleichen und bei Überschreitung der zulässigen Höchstgeschwindigkeit einen Befehl an das Display abzugeben, eine Aufforderung zur Reduzierung der Geschwindigkeit anzuzeigen. Dadurch ist es für den Bediener möglich, eine optimale Geschwindigkeit vorzusehen, bei der sowohl die Sicherheit gewährleistet ist als auch ein zügiges Arbeiten möglich ist.

Die zulässige Höchstgeschwindigkeit wird vorzugsweise abhängig von Fahrtrichtungsneigungswinkel und Anhängelast bei einem Schlepper bestimmt. Die Anhängelast kann beispielsweise vor der Fahrt von dem Bediener manuell eingegeben werden oder durch eine geeignete Sensoreinrichtung erfasst werden. Die Aufforderung zur Reduzierung der Geschwindigkeit kann beispielsweise durch die Darstellung eines Texts, einen nach unten weisenden Pfeil, eine blinkende Fläche oder eine Farbänderung einer Fläche erfolgen.

Gemäß einer bevorzugten Ausführungsform der Erfindung ist der Fahrtrichtungsneigungswinkel des Flurförderzeugs im Display grafisch darstellbar. Dadurch ist der aktuelle Fahrtrichtungsneigungswinkel für einen Bediener schnell zu erfassen, ohne dass er das Display genau fokussieren muss. Die grafische Darstellung kann beispielsweise durch einen Pfeil oder eine Linie erfolgen, deren Lage oder Richtung abhängig vom aktuellen Fahrtrichtungsneigungswinkel geändert werden. Möglich wäre auch, eine Fläche darzustellen, deren Größe oder Farbe abhängig vom aktuellen Fahrtrichtung Neigungswinkel verändert wird.

Vorteile ergeben sich, wenn der Lateralneigungswinkel des Flurförderzeugs im Display grafisch darstellbar ist. Dadurch ist der aktuelle Lateralneigungswinkel für einen Bediener schnell zu erfassen, ohne dass er das Display genau fokussieren muss. Die grafische Darstellung kann beispielsweise wie oben für die Anzeige des Fahrtrichtungsneigungswinkels erfolgen.

Bevorzugt sind der Fahrtrichtungsneigungswinkel des Flurförderzeugs und der Lateralneigungswinkel des Flurförderzeugs im Display in einer gemeinsamen Grafik darstellbar. Dadurch sind beide Winkel auf einen Blick schnell erkennbar. Außerdem kann auf diese Weise die Gesamtneigung des Fahrzeugs dargestellt werden. Vorzugsweise ist der Fahrtrichtungsneigungswinkel durch eine waagerechte Linie darstellbar, die entsprechend dem aktuellen Fahrtrichtungsneigungswinkel parallel verschoben wird. Vorzugsweise ist der Lateralneigungswinkel durch eine Lageänderung dieser waagerechten Linie derart, dass sie einen Winkel mit einer gedachten Linie, die für einen Lateralneigungswinkel von null steht, einschließt. Dabei dieser Winkel vorzugsweise mit größer werdendem Lateralneigungswinkel größer dargestellt werden.

Gemäß einer bevorzugten Ausführungsform der Erfindung weist das Flurförderzeug einen Akustiksignalgeber und eine Fahrtrichtungsneigungswinkeleinrichtung auf und die Fahrtrichtungsneigungswinkeleinrichtung ist eingerichtet, einen aktuellen von dem Fahrtrichtungsneigungssensor ermittelten Fahrtrichtungsneigungswinkel mit einem vorgegebenen maximalen Fahrtrichtungsneigungswinkel zu vergleichen und bei Überschreiten des maximalen Fahrtrichtungsneigungswinkels einen Befehl an den Akustiksignalgeber zur Abgabe eines akustischen Signals zu geben. Dadurch kann die visuelle Darstellung akustisch unterstützt werden. Die Aufmerksamkeit des Bedieners kann dadurch bei Bedarf auf die visuelle Darstellung gelenkt werden. Dadurch kann der Bediener konzentrierter seiner eigentlichen Arbeit nachgehen, ohne zwischendurch immer das Display kontrollieren zu müssen.

Gemäß einer bevorzugten Ausführungsform der Erfindung weist das Flurförderzeug einen Akustiksignalgeber und eine Lateraineigungswinkeleinrichtung auf und die Lateralneigungswinkeleinrichtung ist eingerichtet, einen aktuellen von dem Lateralneigungssensor ermittelten Lateralneigungswinkei mit einem vorgegebenen maximalen Lateraineigungswinkel zu vergleichen und bei Überschreiten des maximalen Lateralneigungswinkels einen Befehl an den Akustiksignalgeber zur Abgabe eines akustischen Signals zu geben. Die Aufmerksamkeit des Bedieners kann dadurch wie oben für den Fahrtrichtungsneigungswinkel beschrieben bei Bedarf auf die visuelle Darstellung gelenkt werden.

Vorzugsweise ist der Akustiksignalgeber eine Hupe oder ein Lautsprecher.

Gemäß einer bevorzugten Ausführungsform der Erfindung weist das Flurförderzeug eine Höchstgeschwindigkeitseinrichtung und eine Höchstgeschwindigkeitsautomatik auf, wobei die Höchstgeschwindigkeitseinrichtung eingerichtet ist, auf Basis des von dem Fahrtrichtungsneigungssensor ermittelten Fahrtrichtungsneigungswinkels eine zulässige Höchstgeschwindigkeit zu bestimmen und mit einer von einer Fahrsteuerung des Flurförderzeugs bereitgestellten aktuellen Fahrgeschwindigkeit zu vergleichen und bei Überschreitung der zulässigen Höchstgeschwindigkeit die Höchstgeschwindigkeitsautomatik zu veranlassen, die Geschwindigkeit des Flurförderzeugs automatisch zu reduzieren, oder die Fahrgeschwindigkeit auf die zulässige Höchstgeschwindigkeit zu begrenzen. Dadurch kann auch dann einen Fahrzustand des Flurförderzeugs eingegriffen werden, wenn der Bediener nicht auf eine Anzeige des Displays reagiert. Vorzugsweise wird der Bediener vor der automatischen Reduzierung der Geschwindigkeit durch eine Anzeige des Displays von dem bevorstehenden automatischen Eingriff informiert. Dadurch kann verhindert werden, dass der Bediener von einer plötzlichen Geschwindigkeitsänderung oder Geschwindigkeitslimitierung überrascht wird.

Weitere Vorteile und Einzelheiten der Erfindung werden anhand der in den schematischen Figuren dargestellten Ausführungsbeispiele näher erläutert. Hierbei zeigt
- Figur 1: eine Seitenansicht eines Flurförderzeugs und
- Figur 2: ein Display.

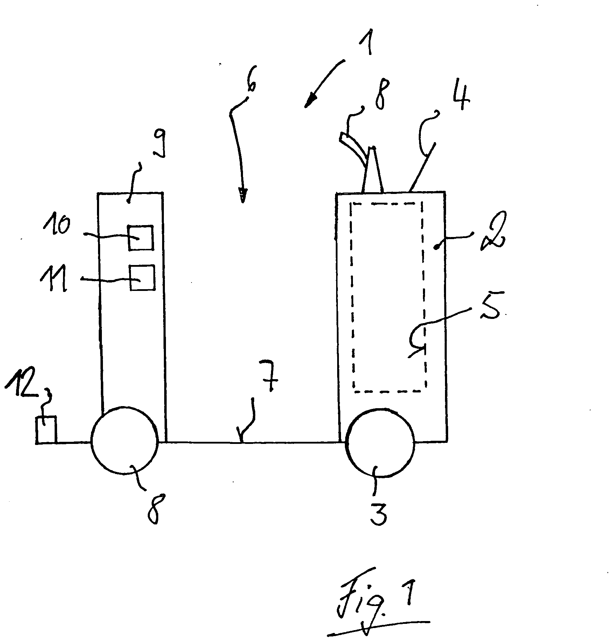

Figur 1 zeigt eine Seitenansicht eines erfindungsgemäßen, als Schlepper ausgebildeten Flurförderzeugs 1. Das Flurförderzeug 1 weist in Fahrzeuglängsrichtung gesehen einen frontseitigen Antriebsteil 2 auf, in dem zumindest ein lenkbares Antriebsrad 3 angeordnet ist. Auf dem frontseitigen Antriebsteil 2 ist ein Display 4 angeordnet. Das Flurförderzeug 1 weist beispielsweise ein elektrisches Antriebssystem mit einem elektrischen Fahrantrieb auf. Der Fahrantrieb umfasst einen in dem Antriebsteil 2 angeordneten und nicht mehr dargestellten, mit dem Antriebsrad 3 in Wirkverbindung stehenden elektrischen Fahrantriebsmotor. Als Lenkantrieb kann ein elektrischer Lenkmotor vorgesehen sein. In dem Antriebsteil 2 ist ein Batteriefach 5 angeordnet, in dem eine Energieversorgungseinrichtung des elektrischen Antriebssystems angeordnet werden kann, beispielsweise ein Batterieblock. Anschließend an das Antriebsteil 2 und das Batteriefach 5 weist das Flurförderzeug 1 einen Fahrerplatz 6 auf, der von einer Standplattform 7 gebildet ist. Es ist alternativ möglich, das Flurförderzeug 1 mit einer Brennstoffzelle als elektrische

Energieversorgungseinheit zu versehen. Zudem kann das Flurförderzeug 1 ein verbrennungsmotorisches Antriebssystem mit einem Verbrennungsmotor aufweisen.

Zur Bedienung des Flurförderzeugs 1 ist eine lenkerähnliche Bedienungsanordnung 8 vorgesehen, die an der Oberseite des Antriebsteils 2 angeordnet ist. Heckseitig grenzt ein Rahmenabschnitt 9 den Fahrerplatz 6 ab. Dieser heckseitige Rahmenabschnitt 9 ist mit Lasträdern 8 versehen. Das erfindungsgemäße Flurförderzeug 1 ist mit einem Fahrtrichtungsneigungssensor 10 und einem Lateralneigungssensor 11 versehen.

Außerdem weist das Flurförderzeug 1 eine Anhängerkupplung 12 auf, mit der das Flurförderzeug 1 mit einem oder mehreren nicht dargestellten Anhängern verbunden werden kann.

Alternativ zu dem dargestellten Flurförderzeug 1 können die heckseitigen Lasträder 8 als Antriebsräder und ein oder zwei frontseitige, nicht-angetriebene gelenkte Räder 3 vorgesehen sein.

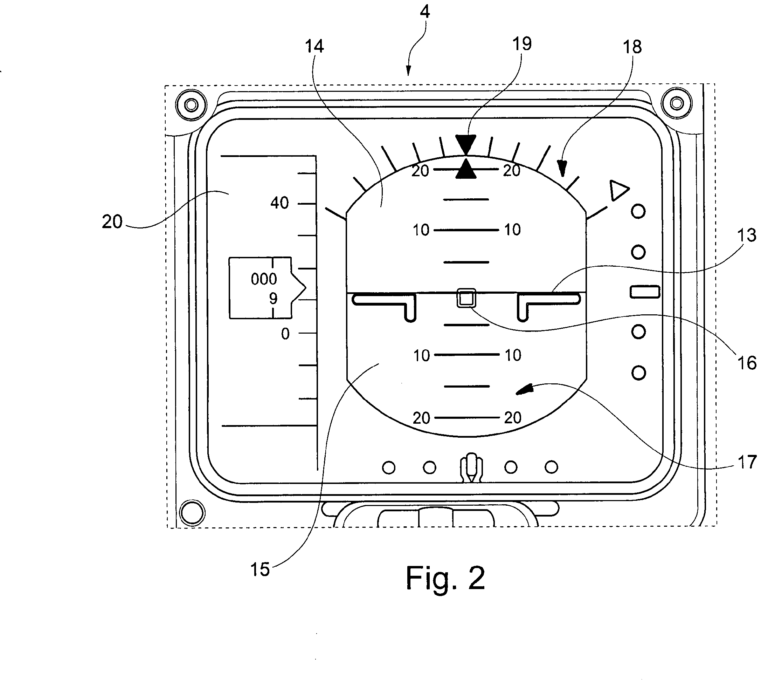

Figur 2 zeigt ein Display 4, das in dem oben beschriebenen Flurförderzeug 1 eingesetzt werden kann. Das Display 4 zeigt eine Horizontlinie 13, die zwei unterschiedlich eingefärbte Flächen 14 und 15 voneinander trennt. Die obere Fläche 14 und die untere Fläche 15 sind jeweils gleich groß. Sie sind annähernd halbkreisförmig ausgebildet und liegen mit der Geraden der Halbkreisfläche an der Horizontlinie 13 an. Die gekrümmten Abschnitte des Halbkreises weisen von der Horizontlinie 13 weg. Die Bereiche, in denen die gekrümmten Abschnitte des Halbkreises sich jeweils mit den Geraden verbinden, sind abgeschnitten. Die abgeschnittenen Bereiche werden in dem Display 4 nicht dargestellt. Die obere Fläche 14 und die untere Fläche 15 sind in unterschiedlichen Farben eingefärbt. Dies ist in Figur 2 nicht dargestellt. In der Mitte der Horizontlinie 13 befindet sich ein zentraler Punkt 16.

Oberhalb und unterhalb der Horizontlinie 13 sind jeweils in der oberen Fläche 14 und der unteren Fläche 15 mehrere zu der Horizontlinie 13 parallele Striche angeordnet, die eine Längsneigungsskala 17 bilden. Der von der Horizontlinie 13 ausgesehen zweite Strich ist jeweils mit der Ziffer 10 versehen. Der von der Horizontlinie 13 ausgesehen vierte Strich ist jeweils mit der Ziffer 20 versehen. Dies gilt sowohl für die sich in der oberen Fläche 14 als auch für die sich in der unteren Fläche 15 befindenden Striche.

Angrenzend an den gekrümmten Bereich der oberen Fläche 14 befindet sich eine Querneigungsskala 18, die in Form eines Teilringes ausgebildet ist und oberhalb des gesamten gekrümmten Bereichs der oberen Fläche 14 an die Fläche 14 angrenzt. In der Mitte der Querneigungsskala 18 befindet sich ein Anzeigedreieck 19. Die Querneigungsskala 18 weist rechts und links des Anzeigedreiecks 19 jeweils fünf Skalenstriche auf. Dabei sind die beiden zu dem Anzeigedreieck 19 benachbarten Skalenstriche auf beiden Seiten jeweils kurz ausgebildet. Der von dem Anzeigedreiecks 19 aus gesehen vierte Strich ist ebenfalls auf beiden Seiten kurz ausgebildet. Die von dem Anzeigedreieck 19 aus gesehen dritten und fünften Skalenstriche sind auf beiden Seiten lang ausgebildet.

Links von der beschriebenen Horizontlinie 13, der oberen Fläche 14 und der unteren Fläche 15 mit der Längsneigungsskala 17 und der Querneigungsskala 18 befindet sich eine numerische Längsneigungsanzeige 20.

Die Längsneigungsskala 17 und die Längsneigungsanzeige 20 werden eingesetzt, um den Fahrtrichtungsneigungswinkel eines Flurförderzeugs 1 anzuzeigen. Die Querneigungsskala 18 wird eingesetzt, um den Lateralneigungswinkel eines Flurförderzeugs 1 anzuzeigen.

Wenn das Flurförderzeug 1 beispielsweise eine Rampe herauf fährt, ändert sich der Fahrtrichtungsneigungswinkel des Flurförderzeugs 1. Der Fahrtrichtungsneigungssensor 10 des Flurförderzeugs 1 gibt den aktuell gemessenen Fahrtrichtungsneigungswinkel in Längsrichtung des Flurförderzeugs 1 an das Display 4 weiter. Die Horizontlinie 13 und der zentrale Punkt 16 verschieben sich auf der Längsneigungsskala 17 parallel zu ihrer bisherigen Lage nach unten. Dadurch vergrößert sich die obere Fläche 14 und die untere Fläche 15 verkleinert sich.

Wenn das Flurförderzeug 1 eine Rampe herab fährt, gibt der Fahrtrichtungsneigungssensor 10 des Flurförderzeugs 1 den aktuell gemessenen Fahrtrichtungsneigungswinkel des Flurförderzeugs 1 ebenfalls an das Display 4 weiter und die Horizontlinie 13 und der zentrale Punkt 16 auf der Längsneigungsskala 17 verschieben sich parallel zu ihrer bisherigen Lage nach oben. Dadurch verkleinert sich die obere Fläche 14 und die untere Fläche 15 vergrößert sich.

Wenn das Flurförderzeug 1 auf einer Fahrfläche fährt, die seitlich geneigt ist, gerät das Flurförderzeug 1 in eine Schieflage, so dass es in Querrichtung geneigt ist. Der Lateralneigungssensor 11 gibt den aktuell gemessenen Lateralneigungswinkel an das Display 4 weiter und die Horizontlinie 13 wird entsprechend dem gemessenen Lateralneigungswinkel so um den zentralen Punkt 16 gedreht, dass sie mit einer gedachten Horizontlinie 13, die einen Lateralneigungswinkel von null darstellt, einen Winkel einschließt.

Wenn das Flurförderzeug 1 sowohl in eine Längsneigung auch in eine Querneigung gerät, weil es beispielsweise eine Rampe herauf oder herab fährt, die zusätzlich seitlich geneigt ist, werden sowohl der Fahrtrichtungsneigungssensor 10 als auch der Lateralneigungssensor 11 Werte ermitteln, die von Null abweichen. In diesem Fall wird die horizontale Linie 13 sowohl nach oben oder unten verschoben als auch um den zentralen Punkt 16 gedreht. Dadurch erhält der Bediener eine sehr anschauliche Darstellung der Lage des Flurförderzeugs 1.

Die Längsneigungsanzeige 20 zeigt den von dem Fahrtrichtungsneigungssensor 10 gemessenen Fahrtrichtungsneigungswinkel des Flurförderzeugs 1 numerisch an. Dadurch kann der Bediener sich auf einfache Weise über den jeweils aktuellen Steigungswinkel informieren.

Bei dem erfindungsgemäßen Flurförderzeug kann der Bedienperson die Längsneigung und die Seiteneigung des Flurförderzeugs sicher angezeigt werden. In Verbindung mit der Anhängelast als weitere Information kann die Bedienperson durch akustische und/oder visuelle Signale zu einer Geschwindigkeitsanpassung aufgefordert werden oder eine automatische Geschwindigkeitsanpassung des Flurförderzeugs 1 erfolgen.

Neben den genannten Flurförderzeugen kann das erfindungsgemäße Flurförderzeug ebenfalls von einem Gegengewichtsgabelstapler oder einem Schubmaststapler gebildet werden.

## Patentansprüche

1. Flurförderzeug (1), insbesondere Schlepper, Kommissionierer oder Plattformwagen, mit einem Bedienplatz (6) und einem Display (4), das derart angeordnet ist, dass es für eine Bedienperson von dem Bedienplatz (6) aus ablesbar ist,
**dadurch gekennzeichnet, dass** das Flurförderzeug (1) einen Fahrtrichtungsneigungssensor (10) zur Bestimmung des Fahrtrichtungsneigungswinkels des Flurförderzeugs (1) aufweist und das Display (4) eingerichtet ist, den von dem Fahrtrichtungsneigungssensor (10) ermittelten Fahrtrichtungsneigungswinkel anzuzeigen.

2. Flurförderzeug (1) nach Anspruch 1, **dadurch gekennzeichnet, dass** das Flurförderzeug (1) einen Lateralneigungssensor (11) zur Bestimmung des Lateralneigungswinkels aufweist und das Display (4) eingerichtet ist, den von dem Lateralneigungssensor (11) ermittelten Lateralneigungswinkel des Flurförderzeugs (1) anzuzeigen.

3. Flurförderzeug (1) nach einem der vorhergehenden Ansprüche, **dadurch gekennzeichnet, dass** das Display (4) eingerichtet ist, den Fahrtrichtungsneigungswinkel anzuzeigen, wenn ein vorbestimmter Fahrtrichtungsneigungswinkel des Flurförderzeugs (1) überschritten ist.

4. Flurförderzeug (1) nach Anspruch 2 oder 3, **dadurch gekennzeichnet, dass** das Display (4) eingerichtet ist, den Lateralneigungswinkel anzuzeigen, wenn ein vorbestimmter Lateralneigungswinkel des Flurförderzeugs (1) überschritten ist.

5. Flurförderzeug (1) nach einem der vorhergehenden Ansprüche, **dadurch gekennzeichnet, dass** das Flurförderzeug (1) eine Höchstgeschwindigkeitseinrichtung aufweist, die eingerichtet ist auf Basis des von dem Fahrtrichtungsneigungssensor (10) ermittelten Fahrtrichtungsneigungswinkels eine zulässige Höchstgeschwindigkeit zu bestimmen und mit einer von einer Fahrsteuerung des Flurförderzeugs bereitgestellten aktuellen Fahrgeschwindigkeit zu vergleichen und bei Überschreitung der zulässigen Höchstgeschwindigkeit einen Befehl an das Display (4) abzugeben, eine Aufforderung zur Reduzierung der Geschwindigkeit anzuzeigen.

6. Flurförderzeug (1) nach einem der vorhergehenden Ansprüche, **dadurch gekennzeichnet, dass** der Fahrtrichtungsneigungswinkel des Flurförderzeugs (1) im Display (4) grafisch darstellbar ist.

7. Flurförderzeug (1) nach einem der Ansprüche 2 bis 6, **dadurch gekennzeichnet, dass** der Lateralneigungswinkel des Flurförderzeugs (1) im Display (4) grafisch darstellbar ist.

8. Flurförderzeug (1) nach einem der Ansprüche 2 bis 7, **dadurch gekennzeichnet, dass** der Fahrtrichtungsneigungswinkel des Flurförderzeugs (1) und der Lateralneigungswinkel des Flurförderzeugs (1) im Display (4) in einer gemeinsamen Grafik darstellbar sind.

9. Flurförderzeug (1) nach einem der vorhergehenden Ansprüche, **dadurch gekennzeichnet, dass** das Flurförderzeug (1) einen Akustiksignalgeber und eine Fahrtrichtungsneigungswinkeleinrichtung aufweist, und die Fahrtrichtungsneigungswinkeleinrichtung eingerichtet ist, einen aktuellen von dem Fahrtrichtungsneigungssensor (10) ermittelten Fahrtrichtungsneigungswinkel mit einem vorgegebenen maximalen Fahrtrichtungsneigungswinkel zu vergleichen und bei Überschreiten des maximalen Fahrtrichtungsneigungswinkels einen Befehl an den Akustiksignalgeber zur Abgabe eines akustischen Signals zu geben.

10. Flurförderzeug (1) nach einem der Ansprüche 2 bis 9, **dadurch gekennzeichnet, dass** das Flurförderzeug (1) einen Akustiksignalgeber und eine Lateralneigungswinkeleinrichtung aufweist, und die Lateralneigungswinkeleinrichtung eingerichtet ist, einen aktuellen von dem Lateralneigungssensor (11) ermittelten Lateralneigungswinkel mit einem vorgegebenen maximalen Lateralneigungswinkel zu vergleichen und bei Überschreiten des maximalen Lateralneigungswinkels einen Befehl an den Akustiksignalgeber zur Abgabe eines akustischen Signals zu geben.

11. Flurförderzeug (1) nach einem der vorhergehenden Ansprüche, **dadurch gekennzeichnet, dass** das Flurförderzeug (1) eine Höchstgeschwindigkeitseinrichtung und eine Höchstgeschwindigkeitsautomatik aufweist, wobei die Höchstgeschwindigkeitseinrichtung eingerichtet ist auf Basis des von dem Fahrtrichtungsneigungssensor (10) ermittelten Fahrtrichtungsneigungswinkels eine zulässige Höchstgeschwindigkeit zu bestimmen und mit einer von einer Fahrsteuerung des Flurförderzeugs bereitgestellten aktuellen Fahrgeschwindigkeit zu vergleichen und bei Überschreitung der zulässigen Höchstgeschwindigkeit die Höchstgeschwindigkeitsautomatik zu veranlassen, die Geschwindigkeit des Flurförderzeugs (1) automatisch zu reduzieren, oder die Fahrgeschwindigkeit auf die zulässige Höchstgeschwindigkeit zu begrenzen.
